# EUROPEAN PATENT SPECIFICATION

(11) **EP 1 742 447 B1**
(45) Date of publication and mention of the grant of the patent: **12.08.2009**
(21) Application number: 05014644.8
(22) Date of filing: 06.07.2005
(51) Int. Cl.: H04M 1/02

(54) **Foldable or slidable portable communication apparatus with housing parts movable in a closed and several open positions and comprising output devices selectivly active according to said positions.**
Tragbarer Kommunikationsapparat mit in mehreren Positionen faltbaren oder verschiebbaren Gehäuseteilen und welches mehrere Ausgabemittel enthält, die entsprechend dieser Positionen selectiv aktivierbar sind.
Appareil de télécommunication portable ayant des boîtiers pliables ou coulissants dans plusieurs positions et des moyens de sorties sélectivement activables d'après lesdites positions.

(43) Date of publication of application: 10.01.2007
(73) Proprietor: Sony Ericsson Mobile Communications AB, 221 88 Lund (SE)
(72) Inventor: Kabanov, Andrei, 21431 Malmö (SE)
(74) Representative: Andersson, Björn E.

(56) References cited:
- EP-A- 0 518 526
- EP-A- 1 473 910
- WO-A-20/05053287
- US-A1- 2001 023 196
- US-A1- 2003 003 947

## Description

### Technical Field of the Invention

The present invention relates to a portable communication apparatus comprising a first and a second housing portion, which are movable in relation to each other, and a first and a second controllable output device.

### Description of Related Art

Foldable apparatuses, such as telephones, are known within the art.

EP 1 473 910 A2 discloses a folding communication apparatus having two speakers arranged on one of the folding members of the apparatus. In the folded state, a first speaker of the speakers will operate as a transmitter and a second speaker of the speakers will operate as receiver, while in the unfolded state, the second speaker will operate as transmitter and a microphone on the other folding member of the apparatus will operate as receiver.

US 2001/00231196 A1 discloses a call tone output system for a foldable and portable telephone set. The call tone output system comprises a detector for detecting folding and unfolding, a tone output control unit, which outputs a call tone from a call tone output unit at call arrival in a folded state, and from a receiver in the unfolded state.

WO 2005/053287 A1 discloses a foldable communication apparatus able to detect an angle position between a first and second housing member to enter one of a plurality of operating states of the apparatus. The operating states relates to access to keypad and display, accepting, and rejecting calls, respectively.

US 2003/0003947 A1 discloses a mobile communication terminal having a microphone arranged on a first surface of a first housing, which opposes to a second housing in a closed state. A first speaker is arranged on a second surface of the second housing, which opposes the first surface in the closed state. A second speaker is arranged on that surface of the first or second housing, which is exposed to the outside in the closed state. A detector detects whether the first and second housings are in the closed state.

A portable communication apparatus may comprise an antenna for wireless communication. An external object may degrade the radiation performance of the antenna. Such an external object may be a head, a body, or a hand of a user may. The closer to the antenna the external object is, the worse the degradation may be.

The antenna of the portable communication apparatus may be arranged in a top portion of a housing of the portable communication apparatus. Arranging the antenna in the top portion has the advantage that the hand of a user will affect the antenna performance relatively little when the user holds the portable communication apparatus in a position for speech communication.

The portable communication apparatus may also comprise a microphone and a loudspeaker for enabling speech communication. For convenient operation, the microphone may be arranged in a bottom portion of the housing and a loudspeaker in a top portion of the housing.

EP 518 526 A1 discloses a portable and foldable radio apparatus, which keeps a matching state of an antenna in a call waiting state and an operating step of the apparatus. A matching circuit is connected to a sensor disposed in the casing for sensing the folded state, on which the matching circuit changes the matching state by means of a switch.

A disadvantage with the arrangement of the loudspeaker and the antenna in the top portion of the housing is that there is a risk that the antenna performance may be degraded. In an operative speech mode, the user may position the loudspeaker close to his ear. Consequently, the antenna will be positioned relatively close to the head of the user, which results in a risk that the antenna performance may be degraded. This might be a problem, for example in areas with relatively bad reception conditions, if the antenna performance is degraded such that speech may be compromised.

Another problem is that the transmission power may increase as a result of transmit power control in the electronic apparatus in response to degraded antenna performance. Increased transmission power will discharge a battery of a battery powered electronic apparatus more quickly, thus degrading standby time and talk time.

Still another problem that may occur is if the user of the portable communication apparatus wears a hearing aid. A hearing aid and a portable communication apparatus may together cause radio frequency interference and electromagnetic interference, if the antenna is positioned too close to the hearing aid.

### Summary of the Invention

It is an object of the invention to provide a portable communication apparatus having improved communication capability.

According to a first aspect, a portable communication apparatus comprises a first output device, a second output device, a first housing portion, a second housing portion being movable between a closed and at least a first and second opened position relative the first housing portion, and an activation unit. The activation unit is adapted to control the first and the second output device in dependence of at least the first and the second opened position of the second housing portion.

The portable communication apparatus may also comprise an antenna, which may be arranged in the second housing portion. The antenna may be movable.

The first output device may be arranged closer to the antenna than the second output device.

The first output device may be arranged in a top portion of the second housing portion and in connection with the antenna.

The second output device may be arranged at a distance from the antenna.

The second output device may be arranged in any of a bottom portion of the second housing portion, a connecting element for connecting the first housing portion to the second housing portion, and a top portion of the first housing portion.

The first output device may in the first opened position face substantially the same direction as the second output device in the second opened position.

The first and the second output devices may be of the same type. The first and the second output devices may be loudspeakers.

The activation unit may comprise a detector adapted to detect at least the first and the second opened positions.

The activation unit may be adapted to activate the first output device when the second housing portion is positioned in the first opened position, and activate the second output device when the second housing portion is positioned in the second opened position.

An opening angle of the second housing portion relative the first housing portion may be smaller in the first opened position than in the second opened position. The opening angle in the second opened position may be at least 180 degrees.

The portable communication apparatus may be a portable or handheld mobile radio communication equipment, a mobile radio terminal, a mobile telephone, a communicator, an electronic organizer, or a smartphone.

According to a second aspect, a method for controlling a portable communication apparatus having a first and a second output device, and a first and a second housing portion, which are movable between a closed and at least a first and a second opened position in relation to each other, comprises detecting whether the second housing portion is positioned in the first or the second opened position, and controlling the first and the second output device in dependence of whether the second housing portion is positioned in the first or the second opened position.

The step of controlling may comprise activating the first output device when it is detected that the second housing portion is positioned in the first opened position, and activating the second output device when it is detected that the second housing portion is positioned in the second opened position.

The step of detecting may comprise detecting an opening angle of the second housing portion relative the first housing portion.

According to a third aspect, a computer program product comprises computer program code means for executing the method for controlling a portable communication apparatus, when said computer program code means are run by an electronic device having computer capabilities.

Further embodiments of the invention are defined in the dependent claims.

It is an advantage of the portable communication apparatus that a user may chose between output devices.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of the invention will appear from the following detailed description of embodiments of the invention, reference being made to the accompanying drawings, in which:
Fig. 1a is a side-view of an embodiment of the portable communication apparatus in a closed position;
Fig. 1b is a front-view of the embodiment of the portable communication apparatus in an opened position;
Fig. 1c is a side-view of the embodiment of the portable communication apparatus in a first opened position;
Fig. 1d is a side-view of the embodiment of the portable communication apparatus in a second opened position;
Fig. 1e is a side-view of the embodiment of the portable communication apparatus in a third opened position;
Fig. 2 is a side-view of another embodiment of the portable communication apparatus in an opened position;
Fig. 3 is a side-view of a further embodiment of the portable communication apparatus in an opened position;
Fig. 4 is a block diagram of the portable communication apparatus;
Fig. 5 is a front-view of a position indicator; and
Fig. 6 is a flow-chart of a method for controlling the portable communication apparatus.

### Detailed Description of Embodiments

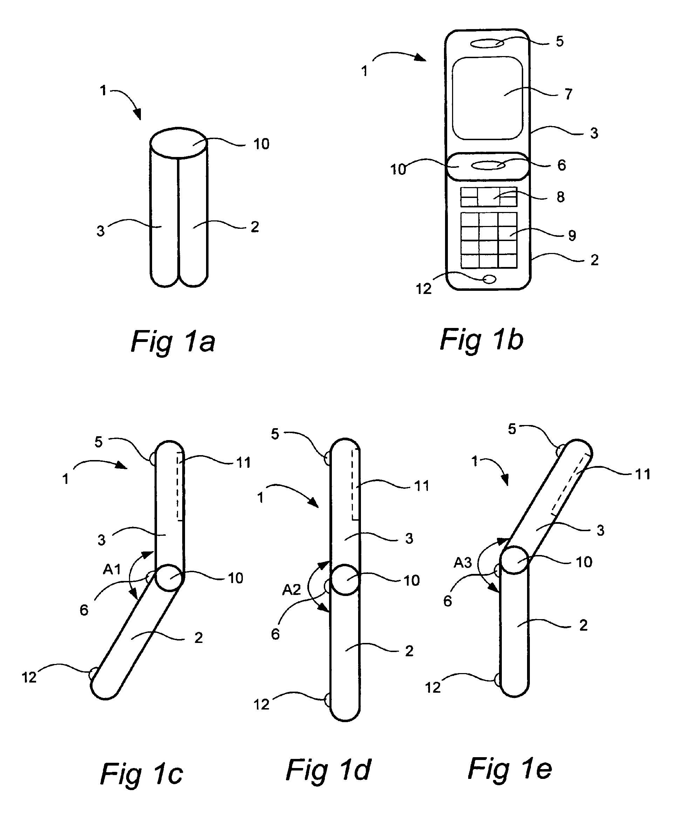

Figs. 1a-1e illustrate an embodiment of a portable communication apparatus 1. The portable communication apparatus 1 comprises a first housing portion 2 and a second housing portion 3. The second housing portion 3 is movable from a closed position (Fig. 1a) to at least a first and a second opened position (Fig. 1c-1e) relative the first housing portion 2, or vice versa. The second housing portion may e.g. be pivotable, slidable or tiltable. Furthermore, the portable communication apparatus 1 comprises a first output device 5 and a second output device 6. Each of the first and the second output device 5, 6 may be a conventional loudspeaker for communicating speech to a user of the portable communication apparatus 1. The first and the second output device 5, 6 are controllable in dependence of at least the first and the second opened position (Figs. 1c-1d) of the second housing portion. It is an advantage to control the first and second output device 5, 6 in dependence of the opened positions, as the communication capability is improved when the user may choose between different output devices 5, 6, as described in more detail below.

In the figures, the output devices 5, 6 are shown as half-spheres for illustrative purposes. However, the output devices 5, 6 may be integrated into the first and/or the second housing portion 2, 3 in connection with openings therein.

In one embodiment, the opened positions may be positions which are detectable and in which a speech communication mode is enabled. If the second housing portion 3 is not positioned in any of the detectable opened positions, the speech communication mode is not enabled at all and thus the first and/or second output device 5, 6 is/are not activated for speech communication. However, each or both of the output devices 5, 6 may be activated for other purposes, such as rendering of a ring signal.

An antenna device 11 is arranged in the second housing portion 3 in connection with the first output device 5, such as substantially opposite the first output device 5 as shown in Fig. 1c. The second output device 6 is arranged at a distance from the antenna 11. The distance may e.g. be in the range of 1-5 cm from any portion of the antenna 11. The second output device 6 is located further away from the antenna 11 than the first output device 5.

The first and the second output device 5, 6 may face substantially the same direction in the opened positions of the second housing portion 3. Thus, by activating the second output device 6 instead of the first output device 5, the head of the user will be located further away from the antenna during use for speech communication, because the second output device is located further away from any part of the antenna 11 than the first output device.

The first position of the second housing portion 3 may be the position illustrated in Fig. 1c. Then, the second position may be either the position illustrated in Fig. 1d or the position illustrated in Fig. 1e. If the second position is the position illustrated in Fig. 1d, the position illustrated in Fig. 1e may be a third position.

Alternatively, the first position is the position illustrated in Fig. 1d. Then, the second position may be the position illustrated in Fig. 1e.

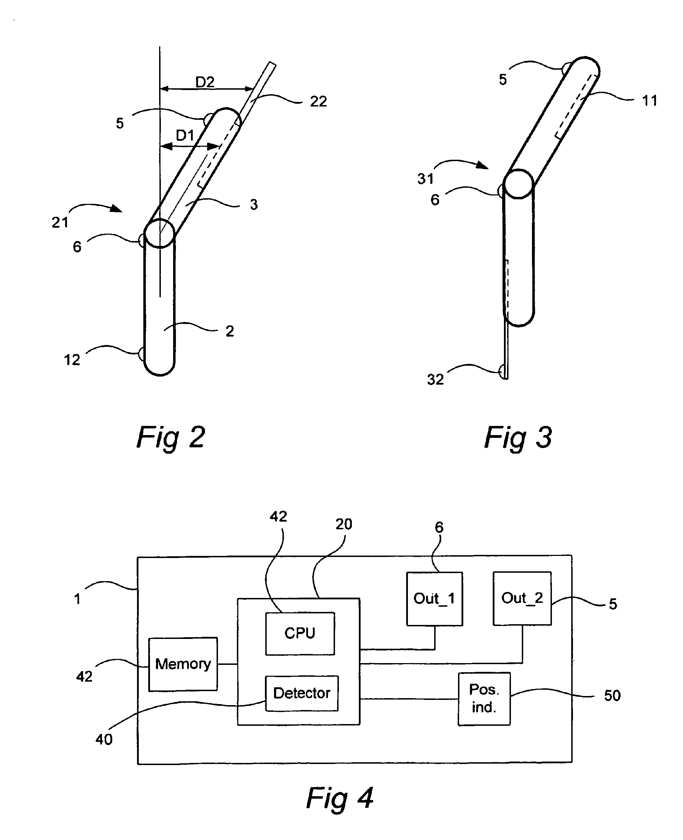

Fig. 2 illustrates the portable communication apparatus 1 in an opened position. The first output device 5 may be positioned in the second housing portion 3. In one embodiment, the first output device 5 is arranged above a third output device 7, such as a display, in a top portion of the second housing portion 3, as shown in Fig. 1b. All directions mentioned in this specification refer to the orientation of the communication apparatus as shown in Fig. 1b, while the entire communication apparatus may be held in any position desired.

The second output device 6 may be arranged between the third output device 7 and one or several input device(s) arranged in the first housing portion 2. The input device may e.g. be a joystick or rocker pad 8 and/or a keypad 9.

In the embodiment of Fig. 1b, the second output device 6 is arranged in a connecting element 10 arranged to connect the first housing portion 2 to the second housing portion 3.

Alternatively, the second output device 6 is arranged in a bottom portion of the second housing portion 3. The second output device may be arranged below output device 7.

Still alternatively, the second output device 6 is arranged in the first housing portion 2, e.g. in a top portion thereof. The second output device may be arranged above input device 8 or 9, or therebetween.

Figs. 1c-1e illustrate three different opened positions of the second housing portion 3 relative the first housing portion 2. The different opened positions may be provided to increase the distance between the portable communication apparatus 1 and the head of a user, as is illustrated in Figs. 1c-1e. The distance may be increased when said apparatus 1 is held in a position for speech communication, i.e. in a position close to the head of the user. Alternatively, the opened positions may be provided to control operation of various output devices. An activation unit 20 (Fig. 4) is adapted to provide operational control (activation/deactivation, switching on/off) of at least the first and the second output device 5, 6. The operation control may be applied in dependence of at least a first and a second opened position of the second housing portion 3 relative the first housing portion 2.

Fig. 1c illustrates a first opened position of the second housing portion 3. An opening angle A1 between the first housing portion 2 and the second housing 3 is less than 180 degrees. In the first opened position, the first output device 5 may be in an operative or activated mode, and the second output device 6 may be in an inoperative or deactivated mode. If the portable communication apparatus 1 is used for speech communication, the user may thus use the first output device 5 when the second housing portion is positioned in the first opened position.

Fig. 1d illustrates a second opened position of the second housing portion 3 relative the first housing portion 2. In the second opened position, the opening angle A2 between the second housing portion 3 relative the first housing portion 2 is substantially 180 degrees. In the second opened position, either or both of the first and the second output device 5, 6 may be in an operative mode. However, if the first output device 5 is not used in the second opened position it may be switched off. The first output device 5 may be switched off automatically when the second position is detected. Then, battery power may be saved. The user may use the second output device 6 when the second housing portion is positioned in the second opened position, wherein the distance between the head of the user and the antenna 11 may be increased.

Fig. 1e illustrates a third opened position of the second housing portion 3 relative the first housing portion 2. In the third opened position, the opening angle A3 between the second housing portion 3 relative the first housing portion is at least 180 degrees. The opening angle for the third opened position may be in the range of 180-270 degrees. In the third opened position, either or both of the first and the second output device 5, 6 may be in an operative state. However, if the first output device 5 is not used in the second opened position it may be switched off automatically. Then, battery power may be saved. The user may use the second output device 5 when the second housing portion is positioned in the third opened position, wherein the distance between the head of the user and the antenna 11 may be increased.

As can be seen from Figs. 1c-1e, the opening angle of the second housing portion 3 relative the first housing portion 2 may be smaller in the first opened position than in the second and/or third opened position. To switch from the first to the second output device 5, 6, the user may move the second housing portion 3 to the second or third opened positions even when the portable communication apparatus 1 is used for speech communication. Thus, it is easy to switch between the first and second output device 5, 6.

The portable communication apparatus 1 may comprise an antenna 11. The antenna 11 may be an internal or an external antenna. In the embodiments of Fig. 1a-1e, the antenna 11 is an internal antenna arranged in the second housing portion 3, which is indicated with a dotted line. The antenna 11 may be arranged in a top portion of the second housing portion 3, behind the first output device 5.

Fig. 2 illustrates an alternative embodiment of the portable communication apparatus 21 having movable antenna 22. The movable antenna 22 may be retractably or foldably movable. In a first position of the movable antenna 22, it is substantially arranged within the second housing portion 3. In a second position, the movable antenna 22 is in an extended position pulled out of the second housing portion 3. In the first position of the movable antenna 22, the distance between a longitudinal centerline of the first housing portion 3 and a center portion of the antenna may be D1, which is indicated with an arrow in Fig. 2. In the second position of the movable antenna 22, the distance between said longitudinal centerline and the center portion of the antenna may be D2, which may be larger than distance D1. Thus, having a movable antenna 22 has the advantage that the distance between the movable antenna 22 and the head of a user when the second output device 6 is used may be increased even further compared to only displacing the second housing portion 3 relative said longitudinal center line.

The movable antenna 22 may be slidably arranged in the second housing portion 3. Alternatively, the movable antenna 22 may be pivotally arranged at an upper portion of and may be arranged at the outside of the second housing portion 3 (not shown).

Fig. 3 illustrates another embodiment of the portable communication apparatus 31, which may comprise a movable microphone 32. The movable antenna 32 may be retractably or foldably movable. In a first retracted position, the movable microphone 32 is arranged in the first housing portion 2, which is indicated with a dotted line in Fig. 3. In a second pulled out position, the movable microphone 32 is positioned in a longitudinal extension of the first housing portion 2. When the second output device 6 is in operation for speech communication, the movable microphone 32 may be in the second position, wherein the movable microphone 32 will be positioned closer to the mouth of the user than in its first position. Thus, speech reception performance of the movable microphone 32 may be improved.

In the opened positions of the second housing portion 3, the first output device 5 in the first opened position faces substantially the same direction as the second output device 6 in the second or third opened positions. Thus, both of the first and the second output device 5, 6 are arranged such that they may be used together with a microphone 12 arranged in the first housing portion 5.

It is an advantage of the portable communication apparatus according to the invention that the first and the second output device 5, 6 may be selectively controllable in dependence of the opened positions of the second housing portion. Thus, the user may choose whether to use either of the first and/or the second output device 5, 6 by simply moving the second housing portion 3. For example, in case of an incoming call, the user may answer the call by placing the second housing portion 3 in the first opened position (Fig. 1c). In the first opened position, the first output device 5 may activated. However, if user wants to improve the antenna performance when the second housing portion 3 is in the first opened position, the second housing portion 3 may be moved to the second opened position with A2 substantially equal to 180 degrees (Fig. 1d). Then, the distance between the second housing portion, and thus the antenna 11, 22, and the head of the user may be increased by moving the apparatus upwards so that the ear is placed opposite of the second output device 6. Thus, the reception performance of the antenna may be increased and/or interference in a hearing aid caused by the close distance between the hearing aid and the antenna 11, 22 may be reduced. The reception performance may be still further increased (interference decreased) by positioning the antenna in the third opened position with A3 substantially equal to 210 degrees (Fig. 1d) and/or pulling out the retractable antenna 22. Consequently, the antenna 11 is, during use for speech communication, positioned further away from the head of the user in the second opened position (fig. 1d) and the third opened position (Fig. 1e) than in the first opened position (Fig. 1c). The more distant the antenna is from the head of the user during use, the better the reception performance of the antenna 11 may be, or the less will the interference in the hearing aid be caused

As shown in Fig. 4, the activation unit 20 may comprise a detector 40, which is adapted to detect at least the first and the second opened positions. Thus, the activation unit 20 may be adapted to control the first and the second output device 5,6 in response to detecting said opened positions. Furthermore, the activation unit 20 may be adapted to activate, or keep activated, the first and the second output device 5, 6 simultaneously. For example at switching over from the first to the second output device 5, 6, or vice versa, it may be desired that the first and the second output devices 5, 6 are active simultaneously for predetermined period of time, such as a few seconds. Thus a comfortable position change may be made without interruption of received speech.

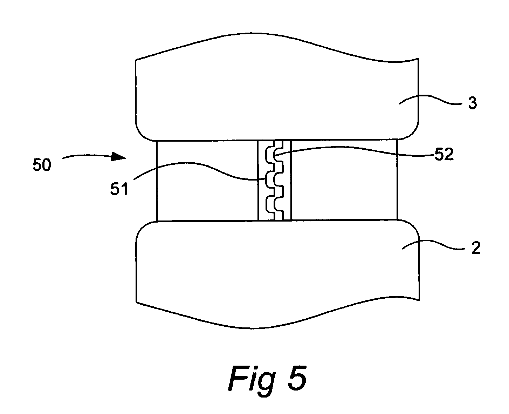

Fig. 5 illustrates a position indicator 50 for indicating the opened positions of the second housing portion 3. The position indicator may be arranged in the connecting element 10. The position indicator 50 may comprise a first partly conductive portion 51. The first partly conductive portion may e.g. be a disc or cylinder having conductive areas made of a conductive material, such as copper. The position indicator 50 may also comprise a second partly conductive portion 52, e.g. arranged on a disc or cylinder, comprising a plurality of protrusions, which mate with a groove of the first partly conductive portion 51. Conductive areas may be arranged in the groove and on the protrusions, respectively. In Fig. 5, the protrusion does not contact the groove for illustrative purposes. However, in a real implementation, the protrusion contacts the groove. Furthermore, in Fig. 5 a plurality of grooves are provided, of which only one may comprise a conductive portion. The other grooves may be provided for providing stability to the connecting element 10. Each protrusion may comprise a conductive part, which is electrically isolated from the conductive part of the other protrusions. When a protrusion mates with a groove having a conductive area, a distinguishable circuit will be closed for each protrusion. The closing of the circuit may generate a signal, which may be detected by the detector 40. Each protrusion may correspond to a certain opened position. The position indicator 50 may form part of the connecting element 10, e.g. a hinge mechanism. The protrusions may be arranged for detecting the opening angle of the second housing portion 3 relative the first housing portion 2.

For easy operation, the discs containing grooves or protrusions may be spring biased, wherein they may be snap fitted in their mated positions. Thus, distinct opened positions may be provided.

In an alternative embodiment, the position indicator 50 is implemented by means of an electrical component, which may generate a plurality of values of an electrical characteristic. Each electrical value may correspond to a specific opened position or specific opening angle. The electrical component may e.g. be a potentiometer, the resistance of which is controlled by the movement of the second housing portion 3. The electrical component may be integrated in the connecting element 10. Moving the second housing portion 3 to an opened position will increase/decrease the value of its electrical characteristic (e.g. resistance), which may be detectable by the detector 40. The detected value may be compared to stored values to determine the opening position/angle. Using a potentiometer has the advantage that fixed opening positions does not have to be defined, rather a continuous range, in dependency of which either of the output devices 5, 6, 7 may be detected. For example, a detected resistance in the range of 50-100 Ω may indicate that the opening angle is less than 180 degrees. A detected resistance in the range of 100-120 Q may indicate an opening angle of 180-200 degrees. A detected resistance in the range of 120-190 Ω may indicate an opening angle of 200-270 degrees. Any number of ranges may be indicated and the output devices 5, 6, 7 may be controlled in dependency thereof.

In still an alternative embodiment of the position indicator, sliding contacts may be arranged to mate with contact areas arranged in the connecting element. The contact areas may be arranged on a cylinder and be radially displaced. Hence, the sliding contacts may alternatingly contact the contact areas to close separate distinguishable circuits to generate a signal. The signal may be detected by detector 40. Each circuit may correspond to a certain opened position of the second housing portion 3.

The activation unit 20 may be adapted to activate the first output device 5 when the second housing portion 3 is positioned in the first opened position, and activate the second output device 6 when the second housing portion 3 is positioned in the second opened position. Also, the activation unit 20 may be adapted to deactivate the first output device 5 when the second housing portion is in the second or third opened position, and deactivate the second output device 6 when the second housing portion 3 is positioned in the first opened position.

The activation unit 20 may be implemented by hardware, such as an FPGA (Field Programmable Gate Array), or an ASIC (Application Specific Integrated Circuit). Alternatively, the activation unit 20 may be implemented by software, which is run by a processor, such as a CPU 42. The software may be stored in a memory 42.

In the embodiments of Figs. 1a-1e, 2 and 3 the connecting element 10 is a hinge mechanism. Thus, the first and second housing portions 2, 3 are pivotable relative each other. Alternatively, the connecting element may be a slide mechanism arranged such that the second housing portion may have different opened positions. In still an alternative embodiment, the connecting element comprises a combination of a sliding mechanism and a hinge mechanism, wherein the second housing portion firstly is slidable to a first opened position, and then tiltable to a second opened position.

The portable communication apparatus may be a portable or handheld mobile radio communication equipment, a mobile radio terminal, a mobile telephone, a communicator, an electronic organizer, or a smartphone.

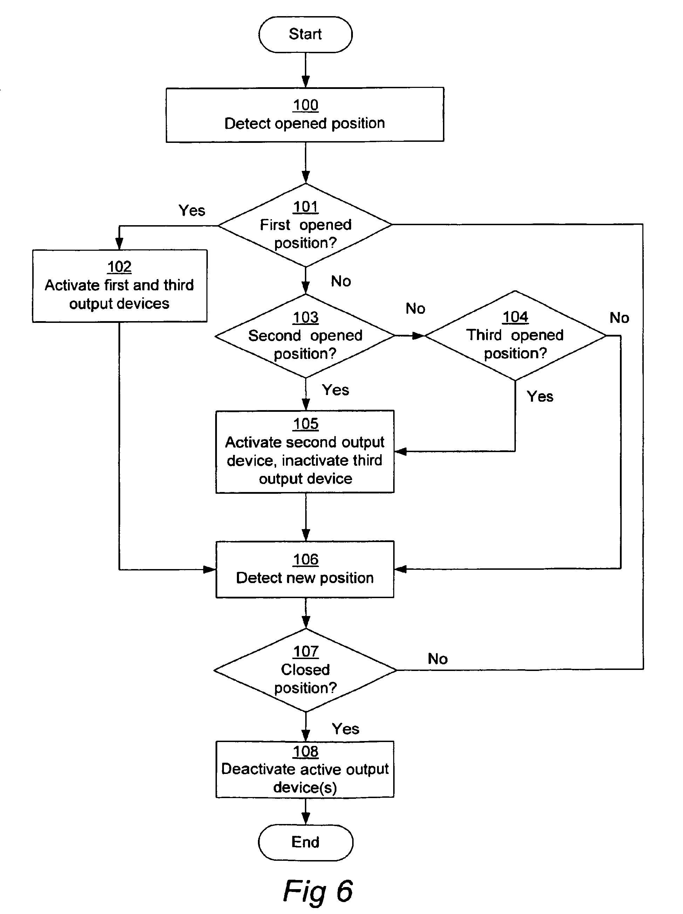

Fig. 6 illustrates a method for controlling at least the first and the second output device 5, 6 of the portable communication apparatus 1, 21, 31. The process illustrated in Fig. 6 may be initiated in response to detecting that the second housing portion 3 is opened from a closed to an opened mode. Alternatively or additionally, the process is initiated in response to an incoming call. Also, the process may be initiated in response to detecting that the position of the second housing portion 3 has changed from a first to a second position. In a first step 100, an opened position is detected. The opened position may e.g. be detected by the detector 40 in response to receiving a signal from the position indicator 50. In response to detecting the opened position, the first and the second output device 5, 6 may be controlled in dependence of whether the second housing portion 3 is positioned in the first, the second or the third opened position. In step 101 it is thus determined whether the second housing portion 3 is positioned in the first opened position. If the answer in step 101 is yes, the procedure proceeds to step 102, wherein the first output device 5 is activated, e.g. by the activation unit 20. Also, a third output device, such as display 7, may be activated. If the answer in step 101 is no, the procedure proceeds to step 103, wherein it is determined whether the second housing portion 3 is positioned in the second opened position. If the answer in step 103 is yes, the procedure proceeds to step 105. If the answer in step 103 is no, the procedure proceeds to step 104. In step 104, it is determined whether the second housing portion is positioned in the third opened position. If the answer in step 104 is yes, the procedure proceeds to step 105. If the answer in step 104 is no, the procedure proceeds to step 106. Alternatively, if the answer in step 104 is no, the procedure is ended. In step 105, the second output device 6 is activated. Also, the third output device 7 may be inactivated, or maintained inactivated if it has not been previously activated. After steps 102 and 105, and if the answer in step 104 is no, the procedure proceeds to step 106. In step 106, a new position is detected, e.g. by the detector 40. Then, the procedure proceeds to step 107, wherein it is determined whether the new detected position is a closed position (Fig. 1a), which may be indicated by position indicator 50. If the answer in step 107 is no, the procedure may return to step 101. If the answer in step 107 is yes, the procedure proceeds to step 108. In step 108, any active output device, such as the first, the second and the third output device 5, 6, 7 may be inactivated.

In another embodiment of the method, any number of opened positions and a closed position may be detected. The further opened position(s) e.g. by providing a corresponding number of determining steps after and corresponding to step 103. If the answer(s) therein is yes, the procedure may proceed to step 105, otherwise to step 106 or end.

In the embodiment of Fig. 6, a third output device, such as the display 7, is also controlled. In the first opened position (Fig. 1c) the display may be activated, as it is not known whether the portable communication apparatus 1 is being used for speech communication or any other function. In the second and/or third opened position, the display 7 may be inactivated, as it is most likely that the portable communication apparatus is used for speech communication. Inactivating the display 7 has the advantage that he power consumption may be reduced, and thus standby and talk time increased. Thus, one output device to be controlled in dependence of the opened position of the second housing portion 3 may be any of the first or the second output device 5, 6. Another output device to be controlled in dependence of the opened position of the second housing portion 3 may be the display 7. In one embodiment, the first and the second output device 5, 6 and the display are controlled in dependence of the opened position of the second housing portion 3. However, it is not necessary to control activation of the third output device in other embodiments of the method according to Fig. 6.

In another embodiment, the first output device 5 is automatically inactivated and the second output device 6 is automatically activated. This may function as an indication to the user to move the second housing portion 3 from the first to the second opened position. The switching may e.g. be automatically made in response to detecting the quality of received signals, e.g. by calculating a BER (Bit Error Rate) or SIR (Signal to Interference Ratio) value of the received signal. Switching may be executed when the quality value is lower than a predetermined threshold value.

The invention may be embedded in a computer program product, which enables implementation of the method and functions described herein. The invention may be carried out when the computer program product is loaded and run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A portable communication apparatus (1, 21, 31), comprising
a first output device (5);
a second output device (6), wherein the first and the second output devices (5, 6) are of the same type and are loudspeakers;
a first housing portion (2);
a second housing portion (3) being movable between a closed and at least a first and second opened position relative to the first housing portion (2), wherein an opening angle of the second housing portion (3) relative to the first housing portion (2) is smaller in the first opened position than in the second opened position and
wherein the opening angle in the second opened position is at least 180 degrees;
an activation unit (40) adapted to control the first and the second output device (5, 6) in dependence of at least the first and the second opened position of the second housing portion (3) by activating the second output device (6) during use for speech communication; and
an antenna (11, 22) arranged in the second housing portion (3), wherein the first output device (5) is arranged closer to the antenna (11) than the second output device (6) such that the second output device (6) is arranged at a distance from the antenna (11, 21).

2. The portable communication apparatus according to claim 1, wherein the antenna (22) is movable.

3. The portable communication apparatus according to any of claims 1 or 2, wherein the first output device (5) is arranged in a top portion of the second housing portion (3) and in connection with the antenna.

4. The portable communication apparatus according to any of claims 1 to 3, wherein the second output device is arranged in any of a bottom portion of the second housing portion (3), a connecting element (10) for connecting the first housing portion (2) to the second housing portion (3), and a top portion of the first housing portion (2).

5. The portable communication apparatus according to any of the previous claims, wherein the first output device (5) in the first opened position faces the same direction as the second output device (6) in the second opened position.

6. The portable communication apparatus according to any of the previous claims, wherein the activation unit comprises a detector adapted to detect at least the first and the second opened positions.

7. The portable communication apparatus according to any of the previous claims, wherein the activation unit (40) is adapted to activate the first output device (5) when the second housing portion (3) is positioned in the first opened position, and activate the second output device (6) when the second housing portion (3) is positioned in the second opened position.

8. The portable communication apparatus according to any of the previous claims, wherein the portable communication apparatus (1, 21, 31) is a portable or handheld mobile radio communication equipment, a mobile radio terminal, a mobile telephone, a communicator, an electronic organizer, or a smartphone.

9. A method for controlling a portable communication apparatus (1, 21, 31) having a first and a second output device (5, 6), wherein the first and the second output devices (5, 6) are of the same type and are loudspeakers, a first and a second housing portion (2, 3), which are movable between a closed and at least a first and a second opened position in relation to each other, wherein an opening angle of the second housing portion (3) relative to the first housing portion (2) is smaller in the first opened position than in the second opened position and wherein the opening angle in the second opened position is at least 180 degrees, and an antenna (11, 22),arranged in the second housing portion (3), wherein the first output device (5) is arranged closer to the antenna (11) than the second output device (6) such that the second output device (6) is arranged at a distance from the antenna (11, 22), comprising
detecting whether the second housing portion (3) is positioned in the first or the second opened position;
controlling the first and the second output device (5, 6) in dependence of whether the second housing portion (3) is positioned in the first or the second opened position; and
activating the second output device (6) during use for speech communication.

10. The method according to claim 9, wherein the step of controlling comprises activating the first output device (5) when it is detected that the second housing portion (3) is positioned in the first opened position, and activating the second output device (6) when it is detected that the second housing portion (3) is positioned in the second opened position.

11. The method according to any of claims 9 or 10, wherein the step of detecting comprises detecting an opening angle of the second housing portion (3) relative the first housing portion (2).

12. A computer program product comprising computer program code means for executing all the method steps according to any of claims 9 to 11, when said computer program code means are run by an electronic device having computer capabilities.

## Patentansprüche

1. Tragbare Kommunikationsvorrichtung (1, 21, 1), welche umfasst:
eine erste Ausgabeeinrichtung (5);
eine zweite Ausgabeeinrichtung (6), wobei die erste und die zweite Ausgabeeinrichtung (5, 6) der gleichen Art sind und Lautsprecher sind;
ein erstes Gehäuseteil (2);
ein zweites Gehäuseteil (3), welches zwischen einer geschlossenen und zumindest einer ersten und zweiten geöffneten Position in Bezug auf das erste Gehäuseteil (2) bewegbar ist, wobei ein Öffnungswinkel des zweiten Gehäuseteils (3) in Bezug auf das erste Gehäuseteil (2) in der ersten geöffneten Position kleiner ist als in der zweiten geöffneten Position, und wobei der Öffnungswinkel in der zweiten geöffneten Position zumindest 180° beträgt;
eine Aktivierungseinheit (40), die eingerichtet ist, die erste und die zweite Ausgabeeinrichtung (5, 6) in Abhängigkeit von zumindest der ersten und der zweiten geöffneten Position des zweiten Gehäuseteils (3) zu steuern, indem die zweite Ausgabeeinrichtung (6) während der Verwendung zur Sprachkommunikation aktiviert wird; und
eine Antenne (11, 22), welche im zweiten Gehäuseteil (3) angeordnet ist, wobei die erste Ausgabeeinrichtung (5) näher an der Antenne (11) als die zweite Ausgabeeinrichtung (6) angeordnet ist, so dass die zweite Ausgabeeinrichtung (6) in einem Abstand von der Antenne (11, 21) angeordnet ist.

2. Tragbare Kommunikationsvorrichtung nach Anspruch 1, wobei die Antenne (22) bewegbar ist.

3. Tragbare Kommunikationsvorrichtung nach einem der Ansprüche 1 oder 2, wobei die erste Ausgabeeinrichtung (5) in einem Kopfteil des zweiten Gehäuseteils (3) und in Verbindung mit der Antenne angeordnet ist.

4. Tragbare Kommunikationsvorrichtung nach einem der Ansprüche 1 bis 3, wobei die zweite Ausgabeeinrichtung in irgendeinem von einem Bodenteil des zweiten Gehäuseteils (3), einem Verbindungselement (10) zum Verbinden des ersten Gehäuseteils (2) mit dem zweiten Gehäuseteil (3) und einem Kopfteil des ersten Gehäuseteils (2) angeordnet ist.

5. Tragbare Kommunikationsvorrichtung nach einem der vorhergehenden Ansprüche, wobei die erste Ausgabeeinrichtung (5) in der ersten geöffneten Position der gleichen Richtung wie die zweite Ausgabeeinrichtung (6) in der zweiten geöffneten Position zugewandt ist.

6. Tragbare Kommunikationsvorrichtung nach einem der vorhergehenden Ansprüche, wobei die Aktivierungseinheit einen Detektor umfasst, der eingerichtet ist, zumindest die erste und die zweite geöffnete Position zu erfassen.

7. Tragbare Kommunikationsvorrichtung nach einem der vorhergehenden Ansprüche, wobei die Aktivierungseinheit (40) eingerichtet ist, die erste Ausgabeeinrichtung (5) zu aktivieren, wenn das zweite Gehäuseteil (3) in der ersten geöffneten Position positioniert ist, und die zweite Ausgabeeinrichtung (6) zu aktivieren, wenn das zweite Gehäuseteil (3) in der zweiten geöffneten Position ist.

8. Tragbare Kommunikationsvorrichtung nach einem der vorhergehenden Ansprüche, wobei die tragbare Kommunikationsvorrichtung (1,21,31) eine tragbare oder mit der Hand gehaltene mobile Funkkommunikationsausrüstung, ein mobiles Funkendgerät, ein Mobiltelefon, ein Kommunikator, ein elektronischer Organisator oder ein Smart-Telefon ist.

9. Verfahren zum Steuern einer tragbaren Kommunikationsvorrichtung (1, 21, 31), welche eine erste und eine zweite Ausgabeeinrichtung (5, 6) hat, wobei die erste und die zweite Ausgabeeinrichtung (5, 6) der gleichen Art sind und Lautsprecher sind, ein erstes und ein zweites Gehäuseteil (2, 3), welche zwischen einer geschlossenen und zumindest einer ersten und einer zweiten geöffneten Position in Bezug zueinander bewegbar sind, wobei ein Öffnungswinkel des zweiten Gehäuseteils (3) in Bezug auf das erste Gehäuseteil (2) in der ersten geöffneten Position kleiner ist als in der zweiten geöffneten Position, und wobei der Öffnungswinkel in der zweiten geöffneten Position zumindest 180° beträgt, und eine Antenne (11, 22), welche im zweiten Gehäuseteil (3) angeordnet ist, wobei die erste Ausgabeeinrichtung (5) näher an der Antenne (11) als die zweite Ausgabeeinrichtung (6) angeordnet ist, so dass die zweite Ausgabeeinrichtung (6) in einem Abstand von der Antenne (11, 22) angeordnet ist, welches umfasst:
Erfassen, ob das zweite Gehäuseteil (3) in der ersten oder der zweiten geöffneten Position positioniert ist;
Steuern der ersten und der zweiten Ausgabeeinrichtung (5, 6) in Abhängigkeit davon, ob das zweite Gehäuseteil (3) in der ersten oder der zweiten geöffneten Position positioniert ist; und
Aktivieren der zweiten Ausgabeeinrichtung (6) während der Verwendung zur Sprachkommunikation.

10. Verfahren nach Anspruch 9, wobei der Steuerungsschritt das Aktivieren der ersten Ausgabeeinrichtung (5) umfasst, wenn erfasst wird, dass das zweite Gehäuseteil (3) in der ersten geöffneten Position positioniert ist, und das Aktivieren der zweiten Ausgabeeinrichtung (6), wenn erfasst wird, dass das zweite Gehäuseteil (3) in der zweiten geöffneten Position positioniert ist.

11. Verfahren nach einem der Ansprüche 9 oder 10, wobei der Erfassungsschritt das Erfassen eines Öffnungswinkels des zweiten Gehäuseteils (3) in Bezug auf das erste Gehäuseteil (2) umfasst.

12. Computerprogrammprodukt, welches Computerprogramm-Codemittel umfasst, um alle Verfahrensschritte gemäß einem der Ansprüche 9 bis 11 auszuführen, wenn die Computerprogramm-Codemittel durch eine elektronische Einrichtung, welche Computerfähigkeiten hat, abgearbeitet werden.

## Revendications

1. Appareil de communication portable (1, 21, 31), comprenant :
un premier dispositif de sortie (5) ;
un second dispositif de sortie (6), dans lequel les premier et second dispositifs de sortie (5, 6) sont du même type et sont des haut-parleurs ;
une première portion de boîtier (2) ;
une seconde portion de boîtier (3) pouvant se déplacer entre une position fermée et au moins une première et une seconde position d'ouverture par rapport à la première portion de boîtier (2), dans lequel un angle d'ouverture de la seconde portion de boîtier (3) par rapport à la première portion de boîtier (2) est plus petit dans la première position d'ouverture que dans la seconde position d'ouverture et dans lequel l'angle d' ouverture, dans la seconde position d'ouverture, est d'au moins 180 degrés ;
une unité d'activation (40), conçue pour commander les premier et second dispositifs de sortie (5, 6), en fonction desdites au moins première et seconde positions d'ouverture de la seconde portion de boîtier (3), en activant le second dispositif de sortie (6) pendant l'usage pour la communication de parole ; et
une antenne (11, 22) disposée dans la seconde portion de boîtier (3), dans lequel le premier dispositif de sortie (5) est disposé plus près de l'antenne (11) que le second dispositif de sortie (6), si bien que le second dispositif de sortie (6) est disposé à une certaine distance de l'antenne (11, 22).

2. Appareil de communication portable selon la revendication 1, dans lequel l'antenne (22) est mobile.

3. Appareil de communication portable selon l'une quelconque des revendications 1 et 2, dans lequel le premier dispositif de sortie (5) est disposé dans une portion supérieure de la seconde portion de boîtier (3) et est en connexion avec l'antenne.

4. Appareil de communication portable selon l'une quelconque des revendications 1 à 3, dans lequel le second dispositif de sortie est disposé dans l'un des éléments suivants : partie inférieure de la seconde portion de boîtier (3), élément de connexion (10) qui connecte la première portion de boîtier (2) à la seconde portion de boîtier (3), et une portion supérieure de la première portion de boîtier (2).

5. Appareil de communication portable selon l'une quelconque des revendications précédentes, dans lequel le premier dispositif de sortie (5), dans la première position d' ouverture, est tourné dans la même direction que le second dispositif de sortie (6) dans la seconde position d'ouverture.

6. Appareil de communication portable selon l'une quelconque des revendications précédentes, dans lequel l'unité d'activation comprend un détecteur conçu pour détecter au moins la première et la seconde position d'ouverture.

7. Appareil de communication portable selon l'une quelconque des revendications précédentes, dans lequel l'unité d' activation (40) est conçue pour activer le premier dispositif de sortie (5) lorsque la seconde portion de boîtier (3) est placée dans la première position d'ouverture et pour activer le second dispositif de sortie (6) lorsque la seconde portion de boîtier (3) est placée dans la seconde position d'ouverture.

8. Appareil de communication portable selon l'une quelconque des revendications précédentes, dans lequel l'appareil de communication portable (1, 21, 31) est un équipement de radiocommunication portable ou portatif, un terminal radio mobile, un téléphone mobile, un communicateur, un organisateur électronique ou un téléphone intelligent.

9. Procédé de commande d'un appareil de communication portable (1, 21, 31) possédant un premier et un second dispositif de sortie (5, 6), dans lequel les premier et second dispositifs de sortie (5, 6) sont du même type et sont des haut-parleurs, une première et une seconde portion de boîtier (2, 3) qui peuvent se déplacer entre une position fermée et au moins une première et une seconde position d'ouverture l'une par rapport à l'autre, dans lequel un angle d'ouverture de la seconde portion de boîtier (3) par rapport à la première portion de boîtier (2) est plus petit dans la première position d'ouverture que dans la seconde position d'ouverture et dans lequel l'angle d'ouverture, dans la seconde position d'ouverture, est d'au moins 180 degrés, et une antenne (11, 22) disposée dans la seconde portion de boîtier (3), dans lequel le premier dispositif de sortie (5) est disposé plus près de l'antenne (11) que le second dispositif de sortie (6), si bien que le second dispositif de sortie (6) est disposé à une certaine distance de l'antenne (11, 22), comprenant les étapes consistant à :
détecter si la seconde portion de boîtier (3) est placée dans la première ou dans la seconde position d'ouverture ;
commander le premier et le second dispositif de sortie (5, 6) en fonction du fait que la seconde portion de boîtier (3) est placée dans la première ou dans la seconde position d'ouverture ; et
activer le second dispositif de sortie (6) pendant l'utilisation en communication de parole.

10. Procédé selon la revendication 9, dans lequel l'étape de commande comprend l'activation du premier dispositif de sortie (5) lorsqu'il est détecté que la seconde portion de boîtier (3) est placée dans la première position d'ouverture et l'activation du second dispositif de sortie (6) lorsqu'il est détecté que la seconde portion de boîtier (3) est placée dans la seconde position d'ouverture.

11. Procédé selon l'une quelconque des revendications 9 et 10, dans lequel l'étape de détection comprend la détection d'un angle d'ouverture entre la seconde portion de boîtier (3) et la première portion de boîtier (2).

12. Progiciel d'ordinateur comprenant des moyens de code de programme d'ordinateur destiné à exécuter toutes les étapes de procédé selon l'une quelconque des revendications 9 à 11, lorsque lesdits moyens de code de programme d'ordinateur sont exécutés par un dispositif électronique ayant des capacités d'ordinateur.
